**Europäisches Patentamt**

**European Patent Office**

**Office européen des brevets**

(19)

(11) Veröffentlichungsnummer: **0 158 236**
**A1**

# (12) EUROPÄISCHE PATENTANMELDUNG

(21) Anmeldenummer: 85103761.4

(22) Anmeldetag: 28.03.85

(51) Int. Cl.⁴: **B 60 R 19/02**

(30) Priorität: 13.04.84 DE 3414005

(43) Veröffentlichungstag der Anmeldung:
16.10.85 Patentblatt 85/42

(84) Benannte Vertragsstaaten:
AT BE CH DE FR GB IT LI LU NL SE

(71) Anmelder: DYNAMIT NOBEL AKTIENGESELLSCHAFT
Postfach 1261
D-5210 Troisdorf, Bez. Köln(DE)

(72) Erfinder: Preissler, Dietmar
Feldbachweg 3
D-8832 Weissenburg(DE)

(72) Erfinder: Wurzer, Heinz
Suffersheim 96
D-8832 Weissenburg(DE)

(54) Stossfänger für Kraftfahrzeuge.

(57) Stoßfänger für Kraftfahrzeuge herstellbar aus Kunststoff durch Spritzgießen mit im wesentlichen L- oder C-förmigem Querschnitt mit einem die Front des Kraftfahrzeuges abdeckenden Mittelteil (14) mit seitlich abgewinkelten integrierten Endteilen (11) mit ggf. kappenartig abgeschlossenem Ende (12), wobei in jedem Endteil auf der konkaven Seite des L- bzw. O-Querschnittes Gleitteile angeformt sind, die in ein an der Karosserie des Kraftfahrzeuges angebrachtes Haltestück verschiebbar in Fahrzeuglängsrichtung und ggf. in Fahrzeugquerrichtung eingreifen.

Fig.1

EP 0 158 236 A1

0158236

Troisdorf, den 21. März 1984
OZ 84017    MG/Bd

DYNAMIT NOBEL AKTIENGESELLSCHAFT
Troisdorf Bez. Köln

Stoßfänger für Kraftfahrzeuge

Die Erfindung bezieht sich auf Stoßfänger für Kraftfahrzeuge, herstellbar aus Kunststoff durch Spritzgießen mit im wesentlichen L- bzw. C-förmigem Querschnitt mit einem die Front des Kraftfahrzeuges abdeckenden Mittelteil mit seitlich abgewinkelten integrierten Endteilen mit ggf. kappenartig abgeschlossenem Ende, wobei in jedem Endteil auf der konkaven Seite des L- bzw. C-Querschnittes ein Gleitteil vorgesehen ist, das in ein an der Karosserie des Kraftfahrzeuges angebrachtes Haltestück verschiebbar in Fahrzeuglängsrichtung und ggf. in Fahrzeugquerrichtung eingreift.

Stoßfänger mit einer Einrichtung zur verschieblichen Halterung der Endteile eines Stoßfängers und zur mindest teilweisen Absorption von Stoßenergie bei einer Stoßbeanspruchung der Endteile des Stoßfängers sind aus der DE-OS 32 21 293 und der DE-OS 23 61 213 bekannt. Die Halterung besteht hierbei grundsätzlich aus zwei oder mehr ineinandergreifenden Teilen, wobei das eine Teil an der Karosserie befestigt wird und das andere an dem Stoßfänger-Endteil. Während die Befestigung des sogenannten Haltestückes an der Karosserie relativ unproblematisch ist, erweist sich die nachträgliche Befestigung des

stellen, wie sie bei der separaten Befestigung von Gleitstücken auf dem Stoßfänger an der gegenüberliegenden Sichtseite auftreten, vermieden. Die Gleitlaschen sind im Zusammenwirken mit dem an der Karosserie angebrachten Haltestück so ausgebildet, daß sie die Wärmeausdehnung des Stoßfängers aus Kunststoff, die wesentlich höher ist als die Wärmeausdehnung des Karosserie bleches Rechnung tragen, in dem die Gleitlaschen über das Haltestück verschiebbar sind und damit den erforderlichen Gleitweg gewährleisten. Die erfindungsgemäße Ausbildung von Gleitlaschen ist bei Stoßfängern mit geschlossenen Enden ebenso anwendbar wie mit offenen Enden.

Die Stoßfänger können aus allen für den Spritzguß oder das Blasen geeigneten Kunststoffen bzw. Kunststoffmischunge, die sich insbesondere für Stoßfänger bewährt haben, hergestellt werden, wie beispielsweise Polypropylen, Polypropylen-Ethylenpropylendien-Kautschukmischungen, Polyurethan, glasfaserverstärkten Thermoplasten, Polycarbonat, Polycarbonat-Polybutylenterephthalat-Mischungen u.a. Die Stoßfänger sind in der Regel einschalig, d.h. mit einer Wandung ausgebildet, wobei der Querschnitt stets leicht gewölbt ist, etwa C- oder L-förmig. Darüber hinaus kann die Wandung noch mit Profilierungen oder Verrippungen versehen sein, einerseits um die Steifigkeit zu erhöhen, andererseits um optische Effekte zu erzielen o.ggf. die Möglichkeit zum Aufsetzen von Zierleisten o.dgl. zu ermöglichen. Das Haltstück, das an der Karosserie befestigt wird, kann entweder aus Metall oder aber auch Kunststoff gespritzt sein. Es ist mit hakenförmigen Vorsprüngen auszubilden, die hinter die Gleitlaschen der Stoßfängerendteile greifen und damit das Stoßfängerende fixieren. Vorteilhaft ist das Haltestück des weiteren zur Erhöhung seiner Steifigkeit verrippt ausgebildet, wobei diese Verrippung in ihrem Verlauf der Innenkontur des Stoßfängers angepaßt sein kann, so daß das Haltestück neben der Verankerung in den Gleitlaschen über seine Form den Stoßfänger trägt und fixiert. Das Haltestück ist als Grundform plattenförmig ausgebildet und wird z.B. mittels Schrauben oder Stiften o.dgl. an der Karosserie befestigt und weist in jedem Fall zugeordnet zu den an dem Stoßfänger ausgebildeten

Gleitlaschen entsprechende hakenförmige Vorsprünge zum Einrasten bzw. Einhaken auf, die eine entsprechende Fixierung der Stoßfängerendteile mit der gewünschten Verschiebbarkeit gewährleisten.

Eine vorteilhafte Ausgestaltung der Erfindung sieht vor, daß die Gleitlasche hakenförmig eine Aufnahmenut gegenüber dem Endteil des Stoßfängers im Querschnitt betrachtet bildend, vorspringt. Die Gleitlasche von relativ kurzer Länge im Verhältnis zum Stoßfängerendteil bildet hierbei zusammen mit dem Stoßfänger einerseits die Aufnahmenut und ermöglicht zum anderen eine Verschieblichkeit auf dem Haltestück sowohl parallel zur Längserstreckung des Stoßfängers und des Fahrzeuges als auch vertikal dazu. Nach einer vorteilhaften Ausgestaltung der Gleitlasche ist diese an den offenen Enden des L- bzw. C-Querschnittes des Endteiles als nach innen gerichtete Abwinkelung in Verlängerung des Stoßfängers in diesem Bereich ausgebildet. Eine solche Gleitlaschenanordnung ermöglicht einerseits die Ausbildung der Gleitlasche mit gleichbleibender Wandstärke und gleichmäßigen Übergängen, wodurch die Qualität des Spritzgußteiles erhöht wird und ergibt andererseits eine Möglichkeit, für eine relativ große und damit tragfähige Ausbildung des Haltestückes und der Halterung damit insgesamt.

Eine weitere vorteilhafte Ausgestaltung des Stoßfängers ist in der Weise möglich, daß die Gleitlasche als Abwinkelung eines sich in Fahrzeuglängsrichtung auf der konkaven Seite des Endteiles vorstehenden Steges ausgebildet ist. Damit wird ermöglicht, daß zwischen der Wandung des Stoßfängerendteiles und der Gleitlasche eine ausreichend große Aufnahmenut zum Einrasten bzw. Einschieben des Haltestückes gebildet wird. Eine weitere Möglichkeit zur Ausbildung der Gleitlasche besteht darin, daß die Gleitlasche auf einem durch eine Profilierung des Endteiles des Stoßfängers parallel zu seiner Längserstreckung gebildeten Vorsprunges in Verlängerung desselben unter Bildung einer Aufnahmenut ausgebildet ist. Die Gleitlaschen können erfindungsgemäß also nicht nur an den äußeren Kanten des Stoßfängerendteiles vorgesehen werden, sondern auch an jedem geeigneten Platz dazwischen auf der Innenseite d.h. auf der der Karosserie zugewandten Seite des Stoßfängers, welches in der Regel nach der üblichen Ausbildung der Stoßfänger im Querschnitt gesehen die konkave Seite sein wird. Mindestens zwei parallel gegeneinander oder auseinander gerichtete Gleitlaschen sind erfindungsgemäß vorgesehen, wobei die Gleitlaschen in gleicher oder versetzter Ebene zueinander angeordnet sein können. Es ist jedoch auch möglich, beispielsweise drei einander zugeordnete Gleitlaschen vorzusehen, so daß bei großen Stoßfängern an drei Punkten die Halterung über das Haltestück an der Karosserie erfolgt. Darüber hinaus ist es auch möglich, beispielsweise zwei Paare von Gleitlaschen in Längserstreckung des Stoßfängerendteiles mit Abstand voneinander vorzusehen, wodurch eine tragfähige belastbare Befestigung beispielsweise bei schweren und großdimensionierten Stoßfängerendteilen über zwei Haltestücke an der Karosserie ermöglicht werden kann.

Um der Gleitlasche ausreichende Festigkeit und damit Tragfähigkeit zu verleihen, ist nicht nur die Größe der Gleitlasche, die im Hinblick auf das Haltestück stets nur eine beschränkte Größe haben kann, ausschlaggebend, sondern auch die Ausgestaltung der Gleitlasche im Hinblick auf die Wandstärke. Es ist auch möglich, die Festigkeit der Gleitlasche beispielsweise durch eine zusätzliche Verrippung auf der der Gleitseite gegenüberliegenden Seite zu erhöhen, eine in der Spritzgußtechnik einfach durchzuführende Maßnahme.

Die Erfindung wird in der Zeichnung an Ausführungsbeispielen näher erläutert. Es zeigen

Figur 1          Aufsicht auf einen Stoßfänger,

Figur 2          Querschnitt des Stoßfängers mit aufgesetztem
                 separaten Gleitstück,

Figur 3 bis 6    die Ansicht A auf den Stoßfänger nach Figur 1 in
                 verschiedener Ausgestaltung mit angeformten
                 Gleitteilen,

Figur 7          den Schnitt aa nach Figur 3,

Figur 8          den Schnitt bb nach Figur 4,

Figur 9          den Schnitt cc nach Figur 5,

Figur 10 und 11  Querschnitte von weiteren Stoßfängeraus-
                 bildungen mit angeformten Gleitlaschen,

Figur 12         Detailansicht einer verrippt ausgebildeten
                 Gleitlasche,

Figur 13         Stoßfängerquerschnitt nach Figur 7 mit eingesetztem Haltestück,

Figur 14         eine weitere Stoßfängerausbildung mit einge-
                 setztem Haltestück.


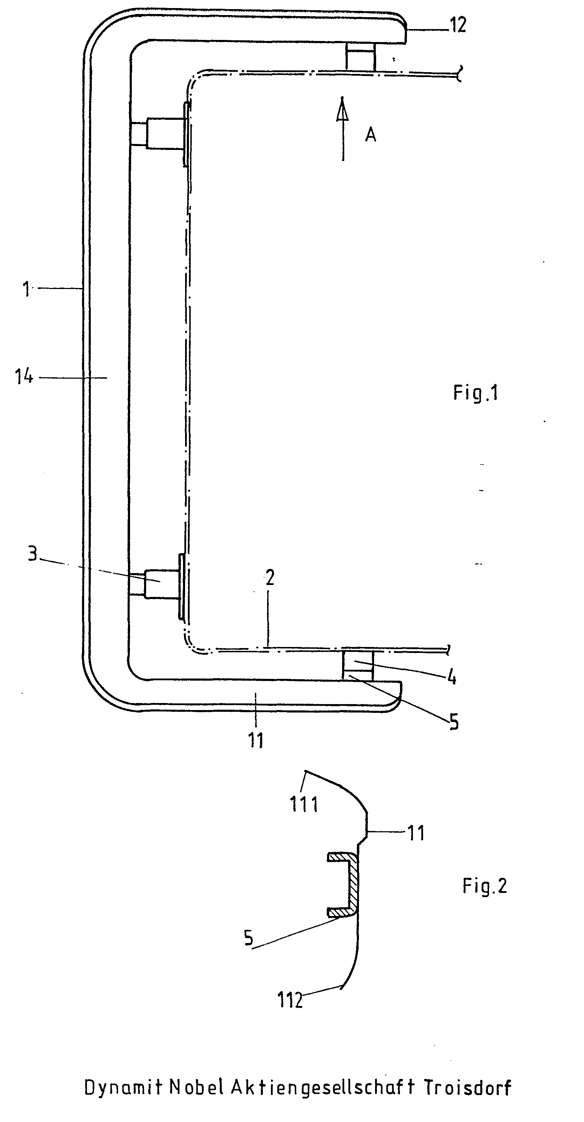

In Figur 1 ist im Prinzip die Befestigung des Stoßfängers 1, Front- oder Heckstoßfänger, an der Karosserie 2 dargestellt. Der Stoßfänger besteht einstückig aus dem die Frontpartie abdeckenden Mittelteil 14 und den beiden seitlichen Endteilen 11, die in der Aufsicht die U-Form des Stoßfängers bilden. Die Endteile 11 sind hierbei am Ende 12 kappenartig. Es ist auch möglich, mehrteilige ausgebildete Stoßfänger mit den erfindungsgemäßen angeformten Gleitlaschen auszubilden. Der Stoßfänger kann an der Karosserie im zentralen Bereich mittels Stoßdämpfern oder starr befestigt sein, die Endteile 11 sind verschiebbar in den an der Karosserie 2 befestigten Haltestücken 4 mittels des an den Stoßfängerendteilen angebrachten Gleitstückes 5 gehalten. Dieses ist die konventionelle Ausführung. In der Figur 2 ist der Stoßfänger 11 im Querschnitt dargestellt, der ein offenes L bildet mit den Enden 111, 112 und bei dem auf der Karosserie zugewandten konkaven Seite das Gleitstück 5 an einer geeigneten Stelle befestigt ist, beispielsweise durch Schweißen oder Einrasten und Verkleben. Eine solche Anordnung und Befestigung eines Gleitstückes an dem Stoßfängerendteil 11 kann zu Einfallstellen auf der Sichtseite des Stoßfängers führen. Darüber hinaus ist ein zusätzlicher Arbeitsvorgang und Herstellvorgang erforderlich.

Die Enden 12 der Stoßfänger wird bevorzugt wie in Figur 1 dargestellt, geschlossen ausgebildet.

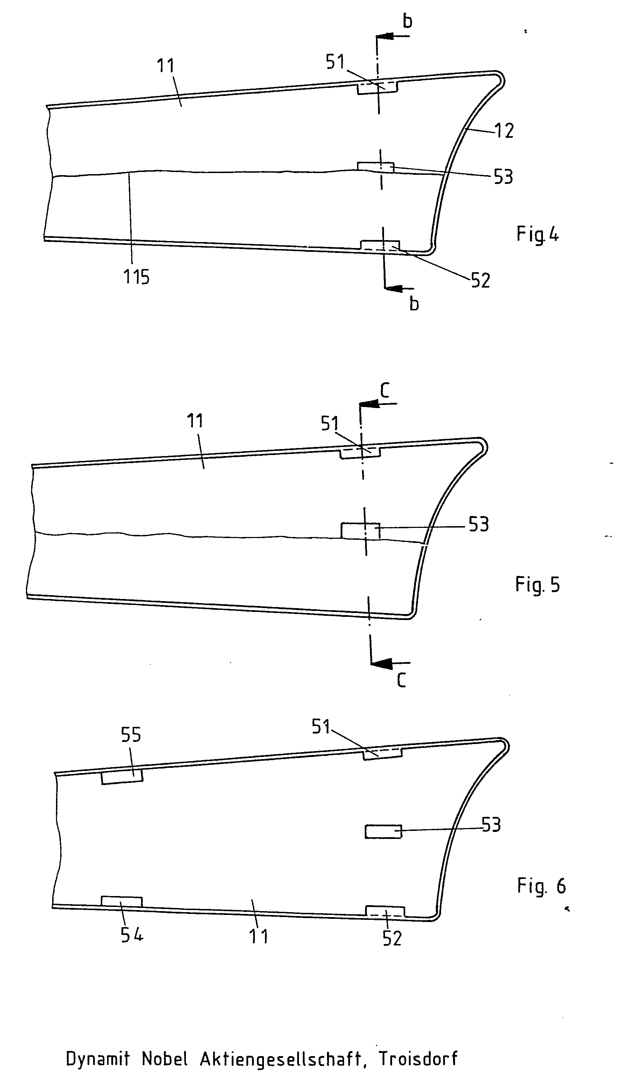

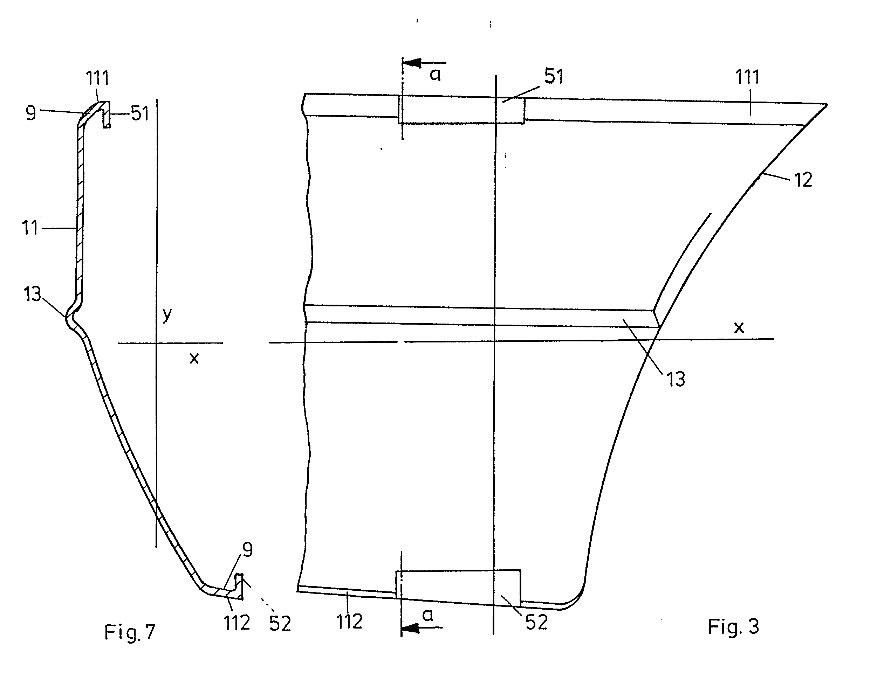

Nach der Erfindung ist vorgesehen, anstelle des separaten Gleitstückes mindestens zwei zueinander in Funktion stehende Gleitlaschen einstückig im Bereich des Endteiles auf der der Karosserie zugewandten Seite des Stoßfängers anzuformen. In den Figuren 3 bis 6 sind schematisch in der Ansicht A auf den Stoßfänger nach Figur 1 mögliche und vorteilhafte Anordnungen von Gleitlaschen im Prinzip dargestellt. Nach Figur 3 ist das Stoßfängerendteil 11 am Ende 12 geschlossen ausgebildet und weist zusätzlich im mittleren Bereich in Längserstreckung die Profilierung 13 auf, wie im Querschnitt aa nach Figur 7 im vergrößerten Maßstab dargestellt. Die Gleitlaschen 51, 52 sind längs der oberen und unteren Kante des Stoßfängerendteiles in Verlängerung desselben abgewinkelt nach innen gerichtet ausgebildet. Hierbei bilden sie mit der Wandung des Stoßfängerendteiles die Aufnahmenut 9. Wie aus Figur 3 und 7 zu ersehen ist, kann nun das Haltestück mit entsprechenden Vorsprüngen in die durch die Gleitlaschen 51, 52 gebildete Aufnahmenut einrasten. Das Stoßfängerendteil kann damit mit den Gleitlaschen, d.h. mit den Innenseiten auf den Vorsprüngen des Haltestückes gleiten und damit sowohl Wärmedehnungen ausgleichen als auch Stoßbeanspruchungen zumindest teilweise auffangen. Bevorzugt erfolgt die Anformung der Gleitlaschen 51, 52 mit gleicher Wandstärke wie das übrige Stoßfängerendteil, so daß ein homogener das Spritzgießen begünstigende Materialfluß und Erstarrungsverhalten gegeben ist.

Eine andere Variante der Anordnung und Ausbildung der angeformten Gleitlaschen an dem Stoßfängerendteil ist nach Figur 4 vorgeschlagen, wobei drei Gleitlaschen vorgesehen sind, nämlich sowohl an den äußeren Kanten des Stoßfängerendteiles die Laschen 51, 52 als auch im mittleren Bereich im Zuge einer durch den Vorsprung 115 gebildeten Profilierung des Stoßfängerendteiles

0158236

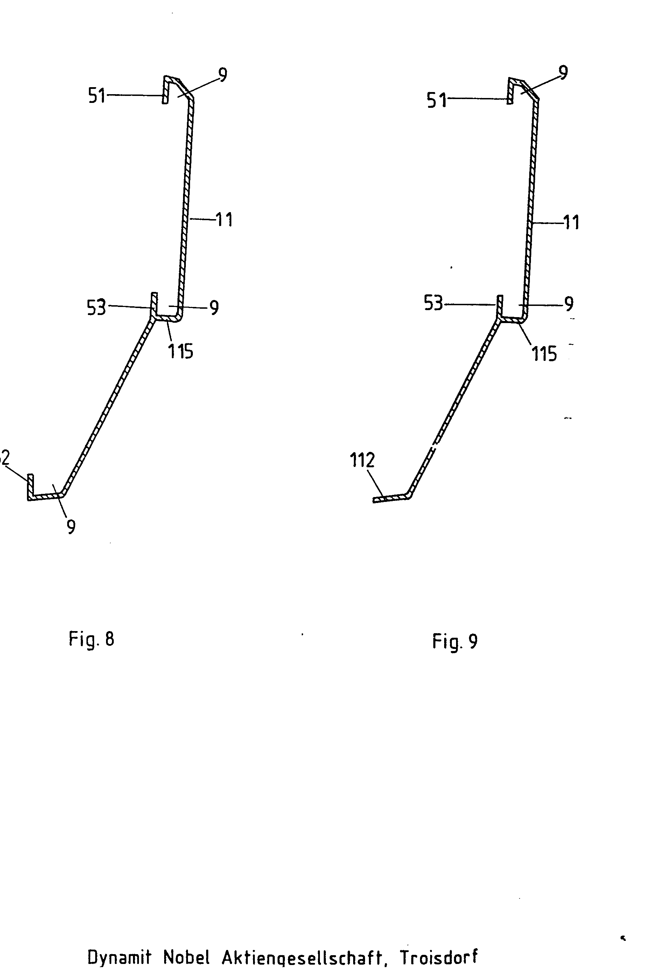

in etwa parallel zur Längserstreckung desselben. In Figur 8 ist der Querschnitt bb durch eine solche Stoßfängerausbildung in vergrößertem Maßstab im Verhältnis zu Figur 4 dargestellt. Die Querschnittgestaltung des Stoßfängers bzw. des Stoßfängerendteiles 11 ist im großen Rahmen variabel, im Prinzip wird jedoch stets eine leicht gewölbte Form mit Profilierungen vorgesehen sein. Nach dem Ausführungsbeispiel nach Figur 8 ist vorgesehen, im mittleren Bereich auf der Innenseite des Stoßfängerendteiles eine Gleitlasche auszubilden, die einstückig angeformt wird, wobei eine Abwinkelung oder Abknickung im Querschnitt des Stoßfängers, die durch den kurzen Steg 115 gekennzeichnet ist, ausgenutzt wird, um die Gleitlasche parallel zu den oberen und unteren Gleitlaschen 51, 52 auszubilden. In dem gezeigten Beispiel nach Figur 8 sind die obere und die mittlere Gleitlasche z.B. in einer Ebene angeordnet, während die untere Gleitlasche hierzu versetzt parallel angeordnet ist, entsprechend der Wölbung des Querschnittes des Stoßfängerendteiles 11. Je nach Ausgestaltung des Haltestückes kann dieses dreifach in den Gleitlaschen 51,52 und 53 eingreifen oder nur in zwei, beispielsweise in das Paar Gleitlaschen 51, 52 oder 51, 53. Die Gleitlaschen können hierbei in drei verschiedenen Ebenen angeordnet werden.

In der Figur 5 ist abweichend von Figur 4 dargestellt, daß nur zwei Gleitlaschen und zwar in der oberen Kante und im mittleren Bereich des Stoßfängerendteiles vorgesehen sind, wie im vergrößerten Querschnitt nach Figur 9 zu ersehen ist.

In der Figur 6 ist schematisch dargestellt, daß das Stoßfängerendteil auch mit Gleitlaschen an mehreren Stellen ausgerüstet ist, beispielsweise einem zueinander gehörenden Gleitlaschenpaar 55 und 54 und einem weiteren Gleitlaschenpaar 51, 52 und ggf. noch einer mittleren Gleitlasche 53.

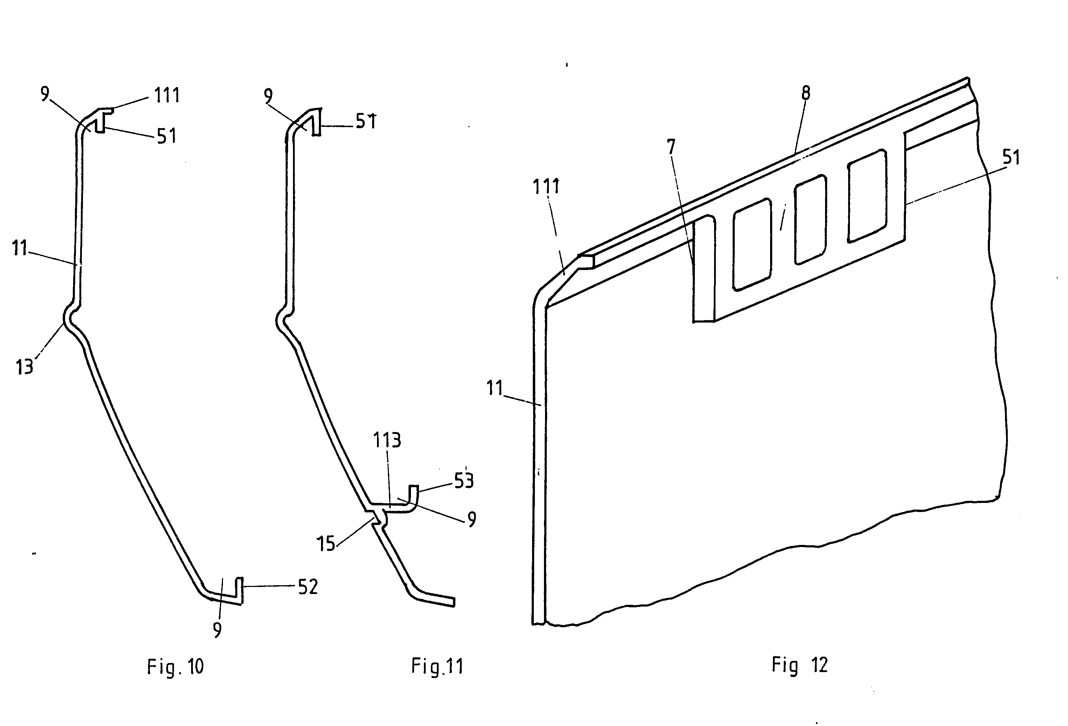

Wie aus den Beispielen nach den Querschnitten von Figur 7 bis 9 hervorgeht, ist es ein vorrangiges Anliegen der Erfindung, die Gleitlaschen konstruktiv so auszubilden und anzuordnen, daß sie möglichst ohne Materialanhäufung im Übergang der Wandung des Endteiles sich anschließen. Während durch Abwicklung an der oberen und unteren Kante 111 bzw. 112 des Stoßfängers in einfacher Weise die Gleitlasche angeformt und die Aufnahmenut für das Haltestück gebildet werden kann, ist dies im mittleren Bereich der Stoßfängerinnenseite je nach Gestalt und Profilierung nicht ohne weiteres möglich. Nach Figur 10 wird die Ausbildung eines von der Endkante 111 zurückgesetzten Gleitlasche 51 gezeigt, nach Figur 11 beispielsweise die Ausbildung einer Gleitlasche 53 mit Aufnahmenut 9 unter Ausbildung eines Zwischensteges 113, im Bereich einer Längsprofilierung 15 des Stoßfängers.

Die angeformte Gleitlasche kann entweder völlig glatt mit gleichmäßiger Wandstärke ausgebildet sein, es ist jedoch möglich, sie ggf. aus Festigkeitsgründen auch zu verrippen, wie beispielhaft in der Figur 12 schematisch dargestellt. Hierbei ist die an der oberen Kante 111 angeformte Gleitlasche 51 auf der der Karosserie zugewandten Seite 8 mit Rippen ausgebildet, während die gegenüberliegende Gleitseite 7 glatt verbleibt.

In Figur 13 ist nunmehr im Querschnitt auszugsweise die Befestigung des Stoßfängerendteiles 11 mittels des Haltestückes 4 an der Karosserie 2 dargestellt. Das Haltestück 4, beispielsweise ein aus Kunststoff gespritztes Teil, ist z.B. mittels Schrauben 6 an der Karosserie 2 befestigt. Das Haltestück 4 weist eine Auflagefläche 45 auf der Karosserie auf und ist am oberen und unteren Ende mit je einem Vorsprung 41 ausgebildet, der hakenförmig nach außen vorsteht und in die Gleitlaschen 51, 52 des Stoßfängerendteiles einrastet. Zur Erhöhung der Steifigkeit und mechanischen Festigkeit des Haltestückes 4 kann dieses ebenfalls mit Rippen zwischen den Vorsprüngen 41 ausgebildet sein, die gleichzeitig als Führungsrippen 44 und Anlage an der Innenfläche des Stoßfängerendteiles 11 dienen. Der Stoßfänger bzw. das Stoßfängerendteil 11 ist über das Haltestück an der Karosserie fixiert, ist jedoch in Fahrzeuglängserstreckung d.h. in Längs- erstreckung des Stoßfängerendteiles verschieblich auf den Vor- sprüngen 41 des Haltestückes geführt, so daß einerseits Wärme- dehnungen und andererseits Stoßbeanspruchungen zumindest teil- weise aufgenommen werden können. Damit wird auch ein Flattern der Enden des Stoßfängers vermieden.

In Figur 14 ist eine weitere Variante der Ausbildung von Stoß- fängerendteil mit angeformten Gleitlaschen 55, 56 und zugehörigem passenden Haltestück 4 dargestellt im Querschnitt. In dem Beispiel nach Figur 14 sind die Gleitlaschen an von der Innenfläche des Stoßfängers 11 im Bereich von Profilierungen 13 oder Abknickungen 16 abgehenden Stegen 113, 114 in der Weise ausgebildet, daß diese Stege an den Enden hakenförmig nach außen gerichtet ausgebildet sind und auf den dort vorgesehenen hakenförmigen Vorsprüngen 54, 55 entsprechende Haken 41, die an dem Haltestück 4 ausgebildet sind, eingreifen. In dem gezeigten Beispiel weist das Haltestück 4 über den mittleren Teil hinausgehend seitliche Stützflansche 43 auf. Das Haltestück in dem gezeigten Beispiel schalenförmig 42 angepaßt an die Kontur des Stoßfängerendteiles ausgebildet, und im inneren Bereich ebenfalls mit Versteifungsrippen 44 ausgestattet, so daß eine gute Anlage und Tragfläche für den Stoßfänger in diesem Bereich gegeben ist. Auch hier findet die Längsverschieblichkeit des Stoßfängers entlang der Verhakungsflächen zwischen den Vorsprüngen 41, 54 und 55 statt. Die offenen Ende 111, 112 des Stoßfängerendteiles überdecken die gesamte Halterung.

Troisdorf, den 21. März 1984
OZ 84017 MG/Bd

Patentansprüche

1. Stoßfänger für Kraftfahrzeuge herstellbar aus Kunststoff durch Spritzgießen mit im wesentlichen L- oder C-förmigem Querschnitt mit einem die Front des Kraftfahrzeuges abdeckenden Mittelteil mit seitlich abgewinkelten integrierten Endteilen mit ggf. kappenartig abgeschlossenem Ende, wobei in jedem Endteil auf der konkaven Seite des L- bzw. C-Querschnittes ein Gleitteil vorgesehen ist, das in ein an der Karosserie des Kraftfahrzeuges angebrachtes Haltestück verschiebbar in Fahrzeuglängsrichtung und ggf. in Fahrzeugrichtung eingreift, d a d u r c h g e k e n n z e i c h n e t , daß auf der konkaven Seite der Endteile (11) mindestens 2 Gleitlaschen (51 bis 57) zum Einhaken des mit entsprechenden Vorsprüngen (41) ausgebildeten an der Karosserie befestigten Haltestückes (4) angeformt sind.

2. Stoßfänger nach Anspruch 1, dadurch gekennzeichnet, daß die Gleitlasche (51 bis 57) hakenförmig eine Aufnahmenut gegenüber dem Endteil (11) im Querschnitt betrachtet bildend, vorspringt.

3. Stoßfänger nach Anspruch 1 oder 2, dadurch gekennzeichnet, daß die Gleitlasche (51, 52) an den offenen Enden (111, 112) des L- bzw. C-Querschnittes der Endteile (11) als nach innen gerichtete Abwinkelung ausgebildet ist.

4. Stoßfänger nach Anspruch 1 oder 2, dadurch gekennzeichnet, daß die Gleitlasche (53) als Abwinkelung eines sich in Fahrzeuglängsrichtung auf der konkaven Seite des Endteiles (11) vorstehenden Steges (113, 114) ausgebildet ist.

5. Stoßfänger nach einem der Ansprüche 1 oder 2, dadurch gekennzeichnet, daß die Gleitlasche (53) auf einem durch eine Profilierung des Endteiles parallel zu seiner Längserstreckung gebildeten Vorsprung (115) ausgebildet ist.

6. Stoßfänger nach einem der Ansprüche 1 bis 5, dadurch gekennzeichnet, daß mindestens zwei parallel gegeneinandergerichtete in gleicher oder versetzter Ebene angeordnete Gleitlaschen ausgebildet sind.

7. Stoßfänger nach einem der Ansprüche 1 bis 5, dadurch gekennzeichnet, daß mindestens zwei parallel auseinandergerichtete in gleicher oder versetzter Ebene angeordnete Gleitlaschen ausgebildet sind.

8. Stoßfänger nach einem der Ansprüche 1 bis 7, dadurch gekennzeichnet, daß die Gleitlasche mit einer glatten Gleitseite (7) und einer verrippten gegenüberliegenden Seite (8) ausgebildet ist.

0158236

12

A

1

14

Fig.1

3

2

4

5

11

111

11

5

Fig.2

112

Dynamit Nobel Aktiengesellschaft Troisdorf

Fig. 4

Fig. 5

Fig. 6

Dynamit Nobel Aktiengesellschaft, Troisdorf

0158236

Fig.7

Fig. 3

0158236

51 —  9

11

53 —  9

115

52

9

Fig. 8

51 —  9

11

53 —  9

115

112

Fig. 9

Dynamit Nobel Aktiengesellschaft, Troisdorf

0158236

Fig. 10

Fig.11

Fig 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 198 433 (DAIMLER-BENZ) * Insgesamt * | 1 | B 60 R 19/02 |
| A | DE-A-3 041 189 (DAIMLER-BENZ) * Insgesamt * | 1 | |
| A | EP-A-0 096 355 (BMW) & DE - A - 3 221 293 | | |
| A | DE-A-2 361 213 (DAIMLER-BENZ) | | |
| A | FR-A-2 345 314 (G.M.) | | |
| A | EP-A-0 011 000 (PEUGEOT) | | RECHERCHIERTE SACHGEBIETE (Int. Cl.4) B 60 R |

Der vorliegende Recherchenbericht wurde für alle Patentansprüche erstellt.

| Recherchenort DEN HAAG | Abschlußdatum der Recherche 31-05-1985 | Prüfer PIRIOU J.C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82